(19) Europäisches Patentamt / European Patent Office / Office européen des brevets

(11) **EP 3 316 436 B1**

(12) **EUROPEAN PATENT SPECIFICATION**

(45) Date of publication and mention
of the grant of the patent:
**11.03.2020 Bulletin 2020/11**

(51) Int Cl.:
***H02J 3/18*** *(2006.01)*    ***H02J 3/38*** *(2006.01)*

(21) Application number: **17194122.2**

(22) Date of filing: **29.09.2017**

(54) **POWER CONVERSION DEVICE**

STROMWANDLUNGSVORRICHTUNG

DISPOSITIF DE CONVERSION D'ALIMENTATION ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2016 JP 2016208859**

(43) Date of publication of application:
**02.05.2018 Bulletin 2018/18**

(73) Proprietor: **Fuji Electric Co., Ltd.
Kawasaki-shi, Kanagawa 210-9530 (JP)**

(72) Inventor: **Kofuji, Kentaro
Kawasaki-shi, Kanagawa 210-9530 (JP)**

(74) Representative: **Appelt, Christian W.
Boehmert & Boehmert
Anwaltspartnerschaft mbB
Pettenkoferstrasse 22
80336 München (DE)**

(56) References cited:
**EP-A1- 2 621 071      EP-A1- 2 680 425
EP-A2- 0 476 618      WO-A1-2014/175214**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 316 436 B1

**Description**

Technical Field

The present invention relates to a power conversion device that can be used for a voltage-source inverter that is inter-connected with a power system.

Background Art

In recent years, renewable energy has been gaining popularity, and large-scale wind farms (collective wind power plants) with many wind power generators are being built. A wind power generator is provided with an AC-DC converter that converts generated power into a direct current on a temporary basis, and a DC-AC inverter that converts this direct current into an alternating current, as well as a harmonic filter that removes harmonic current that is produced by the inverter.

When a wind power generator with a harmonic filter is inter-connected with a power system, resonance is produced due to, for example, the capacitance (electrostatic capacity) of a harmonic filter, the inductance (inductance coefficient) of the power system and/or a transformer, and so on, and, in some cases, the output voltage may become unstable. WO 2014/175214 A1 discloses a resonance suppression device, which has a resonance suppression function as one of its harmonic control functions. This resonance suppression device calculates a current command value by multiplying a harmonic component by a gain, detects the deviation between the current command value and an inverter's output current, and inputs this to a current control unit. The current control unit outputs an inverter voltage command value that matches the deviation. A function to limit the current command value when the inverter voltage command value exceeds the output capacity of the inverter is disclosed. To be more specific, when the output of the current control unit becomes excessive, the voltage command value is limited so as not to reach the voltage limiter, by multiplying the current command value by a gain less than 1. EP 0476618 A2, discloses a reactive power compensating apparatus with higher harmonic suppressing function. in which higher harmonic power components and fundamental wave reactive power components are derived from a load voltage and current. Gains are then obtained which make the higher harmonic power components and fundamental wave reactive power components not exceed predetermined limit values. The higher harmonic power components and fundamental wave reactive power components are respectively multiplied by the gains to obtain limited higher harmonic power components and fundamental wave reactive power components. An output current command is generated in accordance with the limited higher harmonic power components and fundamental wave reactive power components. The output current command is supplied to an inverter which in turn supplies a compensation current to the power system.

Meanwhile, although equipment such as a STATCOM (STATic synchronous COMpensator), a self-commutated SFC and so on are used when a power facility such as a wind power generator is inter-connected with a power system, it is desirable to control these equipment so that fundamental wave components approach the target waveform. The requirements for control related to fundamental wave components (hereinafter referred to as "fundamental wave control functions") are often strictly specified in the grid code, and, generally, have higher priority than harmonic control functions.

Summary of Invention

Technical Problem

However, no consideration has been given to priority between fundamental wave control functions and harmonic control functions. There is a problem that, when there is a possibility of exceeding an inverter's output capacity and fundamental wave control functions and harmonic control functions are limited uniformly, the performance of fundamental wave control functions, which are to be prioritized, is limited.

In particular, the increase of inverter output voltage that is required to output current command values grows in proportion to the frequency. A voltage-source inverter is a device that controls the inverter's output voltage with a semiconductor element such as an IGBT with self-extinction capability, and produces desired output current. Normally, an inverter is inter-connected with a system via a transformer (or an interconnection reactor and/or the like). The inverter's output voltage Vc, the voltage Vs of the system connection point, the inverter's output current Ic and the impedance Z from the inverter to the system connection point hold the following relationship:

$$Vc = Vs + Z \cdot Ic$$

$$Z = R + j2\pi fL$$

(R is the resistance portion, L is the inductance portion, and f is the frequency)

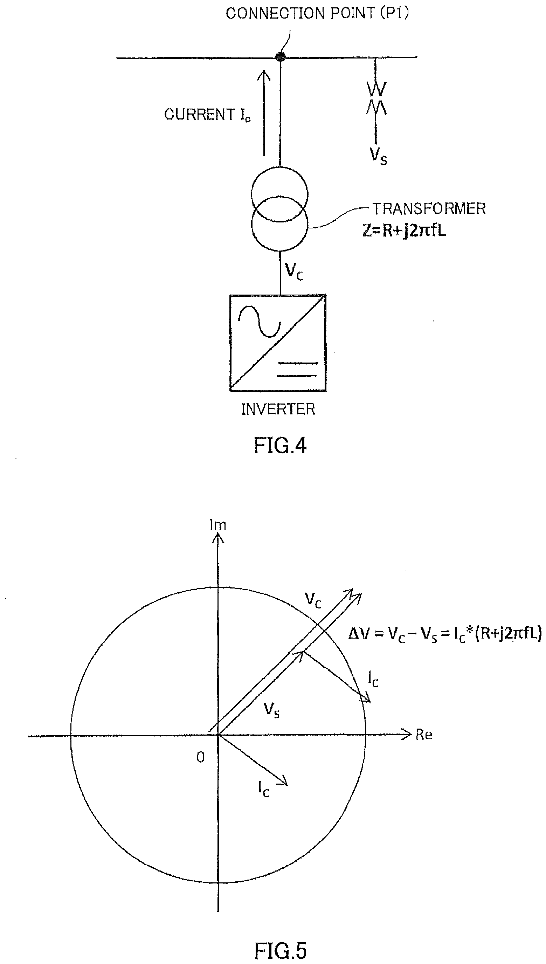

FIG. 4 is a schematic diagram, in which a voltage-source inverter is connected to a system connection point (P1) via a transformer, and FIG. 5 shows the relationship between the voltage-source inverter's output voltage and output current. Z is primarily the inductance component, and grows in proportion to the frequency. Consequently, in harmonic control, the risk that the inverter's output voltage Vc grows and exceeds the limit of output voltage is higher than in fundamental wave control even if the magnitude of the inverter's output current Ic is the same. For example, in the case of voltage drop compensation, when the phase of output current Ic lags behind system voltage Vs by 90°, the output current becomes a capacitive reactive current. Since the impedance of the system is mainly inductance, supplying the capacitive reactive current from the inverter brings about an effect of raising the system's voltage. If the impedance of the transformer is primarily inductance, the phase of output voltage Vc is equal to that of system voltage Vs, and the amplitude increases.

One way of controlling output voltage not to be excessive based on harmonic control functions is to indirectly limit the current command value by providing a limiter and so on. However, since the increase of output voltage varies depending on the frequency of components included in the current command value, the output voltage is limited too much when harmonics of relatively low frequencies are controlled, and, in this case, the voltage utilization rate decreases.

The present invention has been made in view of the above, and it is therefore an object of the present invention to provide a power conversion device that is capable of allowing fundamental wave control functions and harmonic control functions to operate in a coordinated way, and, at the same time, allowing fundamental wave control function to operate preferentially.

Solution to Problem

The invention is defined by a power conversion device with the technical features of independent claim 1. Alternative embodiments are defined in the dependent claims.

Advantageous Effects of Invention

According to the present invention, it is possible to provide a power conversion device that is capable of allowing fundamental wave control functions and harmonic control functions to operate in a coordinated way, and, at the same time, allowing fundamental wave control functions to operate preferentially.

Brief Description of Drawings

FIG. 1 is a schematic diagram to show a power system employing a power conversion device according to a first embodiment;
FIG. 2 is a block diagram to show an estimation unit provided in the power conversion device of the first embodiment;
FIG. 3 is a block diagram to show a harmonic limiting unit provided in the power conversion device of the first embodiment;
FIG. 4 is a schematic diagram, in which a voltage-source inverter is connected to a system connection point via a transformer; and
FIG. 5 is a diagram to show the relationship between the output voltage and the output current of the voltage-source inverter.

Description of Embodiments

Hereinafter, a power conversion device according to the present embodiment will be described with reference to the accompanying drawings.

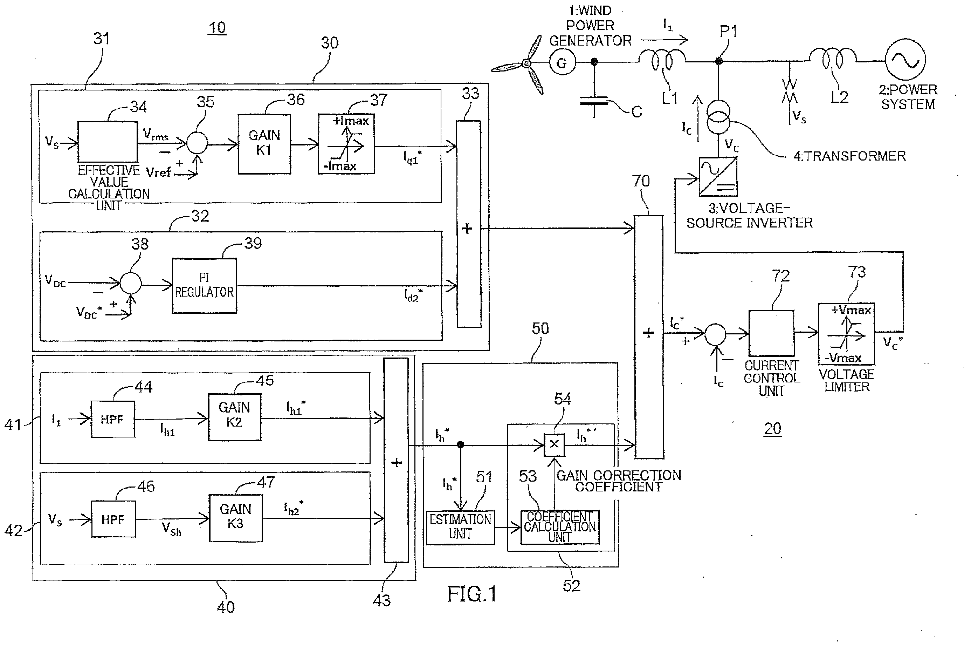

FIG. 1 is a schematic diagram of a power system employing a power conversion device according to a first embodiment. Although the first embodiment exemplifies a power system, where a wind power generator is interconnected, as a power facility, the power facility may be a hydraulic power generator, a power generator or other power generation facilities, or may be a customer facility with a power supply device for railway use, for aluminum smelting plants and so on.

FIG. 1 shows a state in which a wind power generator 1 is connected to a power system 2. The capacitance of a harmonic filter (not shown) is represented by C, and the inductances of the power system 2 and a transformer (not shown) are represented by L1 and L2. A voltage-source inverter 3 is connected to a connection point P1 between the wind power generator 1 and the power system 2 via the transformer 4.

The power conversion device of the present embodiment is comprised of a voltage-source inverter 3 and a control system for controlling the voltage-source inverter 3. The control system of the power conversion device has a current command generation circuit 10, in which fundamental wave control functions and harmonic control functions cooperate and generate a current command value, and a voltage command generation circuit 20, which generates an output voltage command for the voltage-source inverter 3 based on the current command value output from the current command generation circuit 10.

The current command generation circuit 10 has a fundamental wave control function circuit 30, which generates a first current command value for controlling the fundamental wave of a system current $I_1$ that flows in the power system 2, a harmonic control function circuit 40, which generates a second current command value for controlling harmonics of system current $I_1$, and a limiting circuit 50, which limits the second current command value according to the estimated value of the increase in the output voltage of the voltage-source inverter 3, which is an output voltage based on the second current command value.

The fundamental wave control function circuit 30 has a first fundamental wave control function block 31, which takes in the system voltage Vs and generates a reactive current command $I_{q1}^*$, a second fundamental wave control function block 32, which takes in the DC voltage $V_{DC}$ of system voltage Vs and generates an active current command $I_{d2}^*$, and an addition unit 33, which adds the current commands from the first fundamental wave control function block 31 and the second fundamental wave control function block 32.

The first fundamental wave control function block 31 takes in system voltage Vs, which includes AC components, and calculates an effective voltage value Vrms of system voltage Vs in an effective value calculation unit 34. The deviation between the calculated effective voltage value Vrms and a target voltage Vref is calculated in an addition/subtraction unit 35. The deviation detected with respect to system voltage Vs is input to a gain multiplication unit 36. In the gain multiplication unit 36, the deviation is multiplied by a gain k1, and the multiplied value (reactive current command value) is output as reactive current command $I_{q1}^*$ through an upper/lower limiter 37. The upper/lower limiter 37 limits reactive current command $I_{q1}^*$ within an allowable range.

The second fundamental wave control function block 32 implements fundamental wave control functions based on a different scheme than the first fundamental wave control function block 31. To be more specific, DC voltage $V_{DC}$ of system voltage Vs is taken in, and the deviation from target DC voltage $V_{DC}^*$ is calculated in an addition/subtraction unit 38. The deviation calculated with respect to DC voltage $V_{DC}$ is converted into an active current command $I_{d2}^*$, under PI control in a PI regulator 39, and output. A command value, obtained as a sum of reactive current command $I_{q1}^*$ and active current command $I_{d2}^*$, is output as a first current command value for the fundamental wave control function circuit 30. Although, according to the present embodiment, the first current command value for fundamental wave control is calculated from reactive current command $I_{q1}^*$ and active current command $I_{d2}^*$, it is equally possible to use only one of these. In addition, the first current command value for fundamental wave control may be generated based on a scheme other than that shown in FIG. 1.

The harmonic control function circuit 40 has a first harmonic control function block 41, which generates a harmonic current command value $I_{h1}^*$ from system current $I_1$, a second harmonic control function block 42, which generates a harmonic current command value $I_{h2}^*$ from system voltage Vs, and an addition unit 43, which sums the outputs of the first harmonic control function block 41 and the second harmonic control function block 42.

The first harmonic control function block 41 has an HPF 44, which extracts a harmonic current $I_{h1}$ from system current $I_1$, and a gain multiplication unit 45, which multiplies a harmonic current $I_{h1}$ extracted by the HPF 44 by a gain k2. The second harmonic control function block 42 includes an HPF 46, which extracts a harmonic voltage Vsh from system voltage Vs, and a gain multiplication unit 47, which multiplies harmonic voltage Vsh extracted in the HPF 46 by a gain k3. A harmonic current command value $I_h^*$, which is obtained by adding up harmonic current $I_{h1}^*$ output from the first harmonic control function block 41 and harmonic current $I_{h2}^*$ output from

the second harmonic control function block 42, and which is not limited yet, is output from the harmonic control function circuit 40 as a second current command value.

The limiting circuit 50 has an estimation unit 51, which estimates the increase in the output voltage of the voltage-source inverter 3 based on the second current command value (harmonic current command value $I_h^*$ that is not limited yet), and a harmonic limiting unit 52, which limits the second current command value when the estimated value of the increase in the output voltage exceeds a limit value. The harmonic limiting unit 52 has a coefficient calculation unit 53, which calculates a gain correction coefficient so that the estimated value of the increase in the output voltage does not exceed a limit value, and a coefficient multiplication unit 54, which multiplies the second current command value by a gain correction coefficient.

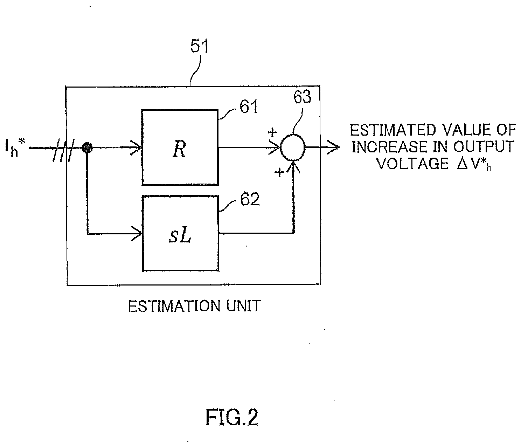

FIG. 2 shows a block diagram of the estimation unit 51, which is compatible with cases of three-phase control. The estimation unit 51 estimates the increase in the output voltage that is required based on harmonic control functions to output current command values. The estimation unit 51 receives as input harmonic current command value $I_h^*$ that is not limited yet, and outputs the estimated value of the increase in the output voltage, $\Delta V_h^*$. As shown in FIG. 2, there are a first calculation unit 61, which multiplies harmonic current command value $I_h^*$ that is not yet limited, by the resistance portion R of impedance Z, a second calculation unit 62, which differentiates harmonic current command value $I_h^*$ that is not yet limited, and multiplies this by the inductance portion L of impedance Z, and an addition unit 63, which adds up the outputs of the first and second calculation units 61 and 62 and calculate an estimated value of the increase in the output voltage $\Delta V_h^*$. Note that impedance Z is the impedance from the voltage-source inverter 3, including the transformer 4, to the system connection point P1. If resistance portion R of impedance Z is large, the power loss due to the output current of the voltage-source inverter increases, so that, normally, resistance portion R is designed to be small. If resistance portion R is small in comparison with the magnitude of impedance Z, the approximation of R = 0 is possible, so that the first calculation unit 61 and the addition unit 63 may be omitted. Also, although a fundamental wave current command value can be converted from AC quantity to DC quantity through dq conversion, given that the harmonic current command value represents AC quantity in which a plurality of frequency components coexist, an estimated value of the increase in the output voltage is also AC quantity.

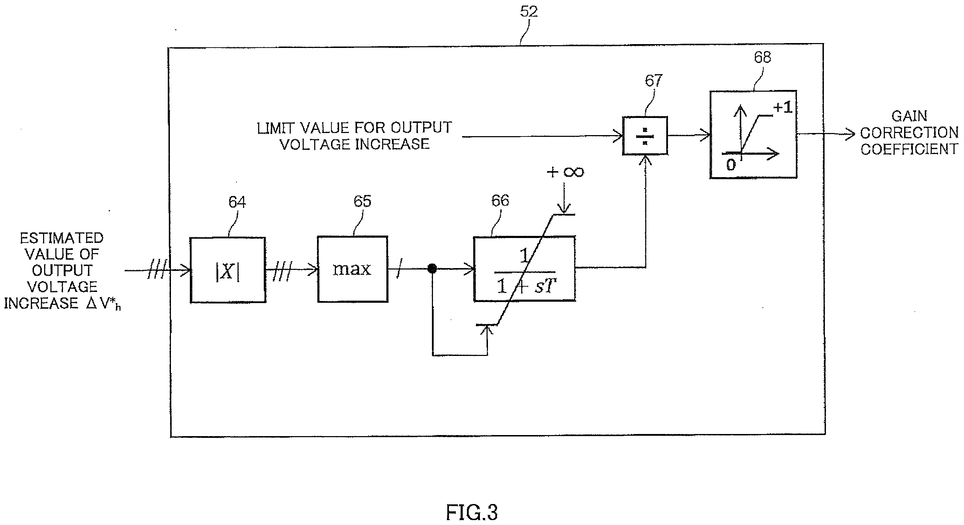

FIG. 3 shows a block diagram of the coefficient calculation unit 53 of the harmonic limiting unit 52, which is compatible with cases of three-phase control. The coefficient calculation unit 53 calculates the gain correction coefficient so that the estimated value of the increase in the output voltage $\Delta V_h^*$ does not exceed a predetermined threshold value (limit value for the increase in the output voltage). As shown in FIG. 3, there are an absolute value circuit 64, which calculates the absolute value of the estimated value of the increase in the output voltage $\Delta V^*_h$ for each phase that is input, a maximum value circuit 65, which extracts one maximum value from among the phase-specific absolute values, a first-order lag element 66 with a limiter, a division circuit 67, which divides the limit value for the increase in the output voltage by the output (the maximum value of each phase) of the first-order lag element 66, and a limiter circuit 68, which outputs a gain correction coefficient smaller than 1, when the estimated value of the increase in the output voltage $\Delta V^*_h$ is greater than limit value for the increase in the output voltage.

An addition unit 70 is connected to the output stages of the fundamental wave control function circuit 30 and the harmonic control function circuit 40. The addition unit 70 adds the outputs of the fundamental wave control function circuit 30 (reactive current command $I_{q1}^*$ and active current command $I_{d2}^*$) and limited harmonic current command value $I_h^{*'}$ of the harmonic control function circuit 40, limited as appropriate in the limiting circuit 50, and outputs current command value $Ic^*$. An addition/subtraction unit 71, which detects the deviation between current command value $Ic^*$ and present system current Ic, a current control unit 72, which generates an output voltage command for the voltage-source inverter 3 according to the deviation, and a voltage limiter 73, which limits the output of the current control unit 72, are connected in series to the output stage of the adder circuit 70. A final output voltage command $Vc^*$ is supplied to the voltage-source inverter 3 via the voltage limiter 73.

The operation of the power conversion device according to the present embodiment, configured as described above, will be described. System current $I_1$ and system voltage Vs, flowing through system connection point P1 between the wind power generator 1 and the power system 2, are detected via a current detector and a voltage detector. System voltage Vs is input to the first fundamental wave control function block 31 and the second harmonic control function block 42. DC voltage $V_{DC}$ of system voltage Vs is input to the second fundamental wave control block 32. Also, system current $I_1$ is input to the first harmonic control function block 41.

In the first fundamental wave control function block 31, reactive current command $I_{q1}^*$ is calculated based on the deviation between effective voltage value Vrms of system voltage Vs, and target voltage Vref. In the second fundamental wave control function block 32, active current command $I_{d2}^*$ is calculated based on the deviation between DC voltage $V_{DC}$ and target DC voltage $V_{DC}^*$. Then, the total value of reactive current command $I_{q1}^*$ and active current command $I_{d2}^*$ is output from the fundamental wave control function circuit 30 as a first current command value for fundamental wave control.

Meanwhile, in the first harmonic control function block 41, a harmonic current command value $I_{h1}^*$, which suppresses harmonics, is calculated based on system

current $I_1$, Also, in the second harmonic control function block 42, a harmonic current command value $I_{h2}^*$, which suppresses harmonics, is calculated based on system voltage Vs. Then, the total value of harmonic current command value $I_{h1}^*$ and harmonic current command value $I_{h2}^*$ is output from the harmonic control function circuit 40 as a second current command value for harmonic control.

Although, according to the present embodiment, the first current command value that is output from the fundamental wave control function circuit 30 is input to the addition unit 70 without being limited, the second current command value that is output from the harmonic control function circuit 40 is input to the addition unit 70 via the limiting circuit 50. That is, fundamental wave control functions and harmonic control functions are operated in a coordinated way, and, at the same time, fundamental wave control functions are operated preferentially. In the limiting circuit 50, the following limitations are applied to the second current command value that is output from the harmonic control function circuit 40. The estimation unit 51 takes in the second current command value from the harmonic control function circuit 40 as a harmonic current command value $I_h^*$ that is yet to be limited, and estimates the increase in the output voltage that is required based on harmonic control functions to output current command values so that the increase of output voltage (inverter output voltage) that is required based on harmonic control functions does not become excessive. To be more specific, a harmonic current command value $I_h^*$ that is not limited yet is multiplied by resistance portion R of impedance Z, while harmonic current command value $I_h^*$ that is not limited yet is also differentiated and multiplied by the inductance portion L of impedance Z, and both are added up and output as an estimated value of the increase in the output voltage. Next, in the harmonic limiting unit 52, the largest value among the maximum values of each phase is extracted, and the gain correction coefficient is calculated so that this maximum value does not exceed the limit value for the increase in the output voltage. When the estimated value of the increase in the output voltage is smaller than the limit value for the increase in the output voltage, the limit value for the increase in the output voltage/the estimated value of the increase in the output voltage > 1 holds, so that the limitation by the limiter circuit 68 is applied, and 1 is output. As a result of this, if the estimated value of the increase in the output voltage is smaller than the limit value for the increase in the output voltage, the second current command value, which is output from the harmonic control function circuit 40, is output without being limited. On the other hand, when the estimated value of the increase in the output voltage is greater than the limit value for the increase in the output voltage, the limit value for the increase in the output voltage/the estimated value of the increase in the output voltage < 1 holds, so that a gain correction coefficient that is smaller than 1 is output from the limiter circuit 68 according to the estimated value of the increase in the output voltage. As a result of this, if the estimated value of the increase in the output voltage is greater than the limit value for the increase in the output voltage, the second current command value is reduced based on the gain correction coefficient, which is smaller than 1 and which becomes smaller according to the magnitude of the estimated value of the increase in the output voltage. As described above, when the magnitude of the estimated value of the increase in the output voltage, $\Delta V^{*}_h$, exceeds a threshold value, the gain correction coefficient is controlled to assume a value smaller than 1. Note that, even when the peak value (amplitude) of the estimated value of the increase in the output voltage $\Delta V^{*}_h$ exceeds the threshold value, the estimated value of the increase in the output voltage $\Delta V^{*}_h$ may temporarily fall below the threshold value, depending on the phase, but will recover slowly toward 1, by virtue of the first-order lag element 66. Meanwhile, when an input changes in the increasing direction and exceeds the threshold value, the lower limiter value of the first-order lag element 66 is used as the input value, so that the output soon becomes the same value as the input value. Harmonic current command value $I_h^{*}$ that is not limited yet is multiplied by a gain correction coefficient thus controlled.

As a result of this, it is possible to generate current command value $Ic^{*}$ by allowing fundamental wave control functions and harmonic control functions to operate in a coordinated way, and, at the same time, allowing fundamental wave control functions to operate preferentially. Based on the deviation between current command value $Ic^{*}$ and system current Ic, output voltage command $Vc^{*}$ to eliminate the deviation is generated and supplied to the voltage-source inverter 3.

As described above, according to the present embodiment, although no limitation is applied to current command values provided based on fundamental wave control functions, when the estimated value of the increase in the output voltage exceeds a predetermined threshold value, limitations are applied to current command values that are provided based on harmonic control functions, so that, in a power conversion device, in which fundamental wave control functions and harmonic control functions are operated in a coordinated way, it is possible to operate fundamental wave control functions preferentially.

Note that the present invention is not limited to the above embodiments, and various changes can be made without departing from the scope of the object of the present invention as defined by the appended claims.

Industrial Applicability

The power conversion device of the present invention is suitable for application to, for example, a power system where a wind power generator is inter-connected.

**Claims**

1. A power conversion device inter-connectable with a power system (2) to which a power facility (1) is connected, the power conversion device is comprised of a voltage-source inverter (3) and a control system for controlling the voltage-source inverter (3), and the voltage source inverter (3) is arranged to be connected to a system connection point (P1) between the power facility (1) and the power system (2), the control system of the power conversion device having a current command generation circuit (10), the current command generation circuit (10) configured to include fundamental wave control functions and harmonic control functions cooperating to generate an inverter's output current command value, and a voltage command generation circuit (20) configured to generate an output voltage command for the voltage-source inverter (3) based on the inverter's output current command value output from the current command generation circuit (10), the current command generation circuit (10) comprising:

   a fundamental wave control function circuit (30), which generates a first inverter's output current command value for controlling a fundamental wave of a system current flowing in the power system;
   a harmonic control function circuit (40), which generates a second current command value of the inverter's output current command for controlling harmonics of the system current; and
   a limiting circuit (50), which limits the second current command value according to an estimated value obtained by estimating an increase in an output voltage based on the second current command value.

2. The power conversion device according to claim 1, wherein the limiting circuit (50) comprises:

   an estimation unit (51), configured to estimate the increase in the output voltage based on the second current command value; and
   a harmonic limiting unit (52), configured to limit the second current command value that is output from the harmonic control function circuit (40) when the estimated value of the increase in the output voltage exceeds a limit value.

3. The power conversion device according to claim 1 or claim 2, wherein:

   the fundamental wave control function circuit (30) is configured to output a reactive current command and/or an active current command as the first current command value; and
   the harmonic control function circuit (40) is configured to output a harmonic current command, which matches a harmonic component extracted from the system current and/or a system voltage, as the second current command value.

4. The power conversion device according to claim 2 or 3, wherein the estimation unit (51) is configured to, before being limited in the harmonic limiting unit (52), differentiate the second current command value, multiply it by an inductance portion L of an impedance Z, and output it as the estimated value of the increase in the output voltage.

5. The power conversion device according to claim 4, wherein the estimation unit comprises:

   a first calculation unit (61), configured to, before being limited in the harmonic limiting unit (52), multiply the second current command value by a resistance portion R of impedance Z to the system connection point (P1);
   a second calculation unit (62), configured to, before being limited, differentiate the second current command value and multiply it by the inductance portion L of impedance Z; and
   an addition unit (63), configured to add outputs of the first calculation unit (61) and the second calculation unit (62) and further configured to output them as the estimated value of the increase in the output voltage.

6. The power conversion device according to one of claim 2 to claim 5, wherein the harmonic limiting unit (52) comprises:

   a coefficient calculation unit (53), for calculating a gain correction coefficient so that the estimated value of the increase in the output voltage does not exceed the limit value; and
   a coefficient multiplication unit (54), for multiplying the second current command value, before the second current command value is limited, by the gain correction coefficient.

7. The power conversion device according to claim 6, wherein the harmonic limiting unit (52) has a lag element (66), configured to operate with a delay only when the estimated value decreases.

**Patentansprüche**

1. Stromumwandlungsvorrichtung, die mit einem Stromversorgungsnetz (2) verbindbar ist, mit dem eine Stromerzeugungseinrichtung (1) verbunden ist, wobei die Stromumwandlungsvorrichtung einen Spannungsquellenumrichter (3) und ein Steuersystem zum Steuern des Spannungsquellenumrichters (3) umfasst und der Spannungsquellenumrichter (3) derart ausgeführt ist, dass er mit einem Systemverbindungspunkt (P1) zwischen der Stromerzeugungseinrichtung (1) und dem Stromversorgungsnetz (2) verbunden werden kann, das Steuersystem der Stromumwandlungsvorrichtung eine Stromsollwerterzeugungsschaltung (10) aufweist und die Stromsollwerterzeugungsschaltung (10) derart konfiguriert ist, dass sie Grundwellensteuerfunktionen und Oberwellensteuerfunktionen umfasst, die zusammenwirken, um den Ausgangsstromsollwert eines Wechselrichters zu erzeugen, und eine Spannungssollwerterzeugungsschaltung (20), die konfiguriert ist, einen Ausgangsspannungssollwert für den Spannungsquellenumrichter (3) auf Basis des Ausgangsstromsollwerts des Wechselrichters zu erzeugen, der von der Stromsollwerterzeugungsschaltung (10) ausgegeben wird, wobei die Stromsollwerterzeugungsschaltung (10) umfasst:

   eine Grundwellensteuerfunktionsschaltung (30), die einen Ausgangsstromsollwert eines ersten Umrichters zum Steuern einer Grundwelle eines Systemstroms erzeugt, der im Stromversorgungsnetz fließt;
   eine Oberwellensteuerungsfunktionsschaltung (40), die einen zweiten Stromsollwert des Ausgangsstromsollwerts des Umrichters zum Steuern von Oberschwingungen des Systemstroms erzeugt; und
   eine Begrenzungsschaltung (50), die den zweiten Stromsollwert entsprechend eines Schätzwerts begrenzt, der durch Abschätzen eines Anstiegs einer Ausgangsspannung basierend auf dem zweiten Stromsollwert erlangt ist.

2. Stromumwandlungsvorrichtung nach Anspruch 1, wobei die Begrenzungsschaltung (50) umfasst:

   eine Abschätzungseinheit (51), die konfiguriert ist, den Anstieg in der Ausgangsspannung basierend auf dem zweiten Stromsollwert abzuschätzen; und
   eine Oberwellenbegrenzungseinheit (52), die konfiguriert ist, den zweiten Stromsollwert zu begrenzen, der von der Oberwellensteuerungsfunktionsschaltung (40) ausgegeben wird, wenn der geschätzte Wert des Anstiegs in der Ausgangsspannung einen Grenzwert überschreitet.

3. Stromumwandlungsvorrichtung nach Anspruch 1 oder Anspruch 2, wobei:

   die Grundwellensteuerfunktionsschaltung (30) konfiguriert ist, einen Blindstromsollwert und/oder einen Wirkstromsollwert als den ersten Stromsollwert auszugeben; und
   die Oberwellensteuerungsfunktionsschaltung (40) konfiguriert ist, einen Oberwellenstromsollwert als den zweiten Stromsollwert auszugeben, der mit einer harmonischen Komponente übereinstimmt, die aus dem Systemstrom und/oder einer Netzspannung entnommen ist.

4. Stromumwandlungsvorrichtung nach Anspruch 2 oder 3, wobei die Schätzeinheit (51) derart konfiguriert ist, dass sie, bevor sie in der Oberwellenbegrenzungseinheit (52) begrenzt wird, den zweiten Stromsollwert differenziert, mit einem Induktivitätsteil L einer Impedanz Z multipliziert und ihn als den geschätzten Wert des Anstiegs in der Ausgangsspannung ausgibt.

5. Stromumwandlungsvorrichtung nach Anspruch 4, wobei die Abschätzungseinheit umfasst:

   eine erste Berechnungseinheit (61), die derart konfiguriert ist, dass sie, bevor sie in der Oberwellenbegrenzungseinheit (52) begrenzt wird, den zweiten Stromsollwert mit einem Widerstandsteil R der Impedanz Z zum Systemverbindungspunkt (P1) multipliziert;
   eine zweite Berechnungseinheit (62), die derart konfiguriert ist, dass sie, bevor sie begrenzt wird, den zweiten Stromsollwert differenziert und ihn mit dem Induktivitätsteil L der Impedanz Z multipliziert; und
   eine Additionseinheit (63), die konfiguriert ist, Ausgaben der ersten Berechnungseinheit (61) und der zweiten Berechnungseinheit (62) zu addieren, und die ferner konfiguriert ist, diese als den geschätzten Wert des Anstiegs der Ausgangsspannung auszugeben.

6. Stromumwandlungsvorrichtung nach einem von Anspruch 2 bis Anspruch 5, wobei die Oberwellenbegrenzungseinheit (52) umfasst:

   eine Koeffizientenberechnungseinheit (53) zum Berechnen eines Verstärkungskorrekturkoeffizienten, sodass der geschätzte Wert des Anstiegs in der Ausgangsspannung den Grenzwert nicht überschreitet; und
   eine Koeffizientenmultiplikationseinheit (54) zum Multiplizieren des zweiten Stromsollwerts mit dem Verstärkungskorrekturkoeffizienten, bevor der zweite Stromsollwert begrenzt wird.

7. Stromumwandlungsvorrichtung nach Anspruch 6, wobei die Oberwellenbegrenzungseinheit (52) ein Verzögerungselement (66) aufweist, das konfiguriert ist, nur mit einer Verzögerung zu arbeiten, wenn sich der geschätzte Wert verringert.

**Revendications**

1. Dispositif de conversion de puissance interconnectable avec un réseau électrique (2) auquel est raccordé un équipement énergétique (1), le dispositif de conversion de puissance est composé d'un onduleur de source de tension (3) et d'un système de contrôle pour contrôler l'onduleur de source de tension (3), et l'onduleur de source de tension (3) est conçu pour être connecté à un point de connexion au réseau (P1) entre l'équipement énergétique (1) et le réseau électrique (2), le système de contrôle du dispositif de conversion de puissance ayant un circuit de génération de commande de courant (10), le circuit de génération de commande de courant (10) étant configuré pour inclure des fonctions de contrôle d'ondes fondamentales et des fonctions de contrôle d'harmoniques coopérant pour générer une valeur de commande de courant de sortie d'onduleur, et un circuit de génération de commande de tension (20) configuré pour générer une commande de tension de sortie pour l'onduleur de source de tension (3) sur la base de la valeur de commande de courant de sortie de l'onduleur produite à partir du circuit de génération de commande de courant (10), le circuit de génération de commande de courant (10) comprenant :

   un circuit de fonction de commande d'onde fondamentale (30) qui génère une première valeur de commande de courant de sortie d'onduleur pour contrôler une onde fondamentale d'un courant de réseau circulant dans le réseau électrique ;
   un circuit de fonction de commande d'harmoniques (40) qui génère une seconde valeur de commande de courant de la commande de courant de sortie d'onduleur pour contrôler des harmoniques du courant de réseau ; et
   un circuit de limitation (50) qui limite la seconde valeur de commande de courant en fonction d'une valeur estimée obtenue en estimant une augmentation d'une tension de sortie sur la base de la seconde valeur de commande de courant.

2. Dispositif de conversion de puissance selon la revendication 1, dans lequel le circuit de limitation (50) comprend :

   une unité d'estimation (51), configurée pour estimer l'augmentation de la tension de sortie sur la base de la seconde valeur de commande de courant ; et
   une unité de limitation d'harmoniques (52), configurée pour limiter la seconde valeur de commande de courant qui est produite par le circuit de fonction de commande d'harmoniques (40) lorsque la valeur estimée de l'augmentation de

**3.** Dispositif de conversion de puissance selon la revendication 1 ou la revendication 2, dans lequel le circuit de fonction de commande d'ondes fondamentales (30) est configuré pour produire en sortie une commande de courant réactif et/ou une commande de courant actif en tant que première valeur de commande de courant ; et le circuit de fonction de commande d'harmoniques (40) est configuré pour produire en sortie une commande de courant d'harmoniques, qui correspond à une composante d'harmonique extraite du courant de réseau et/ou d'une tension de réseau, en tant que seconde valeur de commande de courant.

**4.** Dispositif de conversion de puissance selon la revendication 2 ou 3, dans lequel l'unité d'estimation (51) est configurée, avant d'être limitée dans l'unité de limitation d'harmoniques (52), pour différencier la seconde valeur de commande de courant, la multiplier par une partie inductance L d'une impédance Z, et la produire en sortie en tant que valeur estimée de l'augmentation de la tension de sortie.

**5.** Dispositif de conversion de puissance selon la revendication 4, dans lequel l'unité d'estimation comprend :

une première unité de calcul (61) configurée, avant d'être limitée dans l'unité de limitation d'harmoniques (52), pour multiplier la seconde valeur de commande de courant par une partie résistance R d'impédance Z au point de connexion au réseau (P1) ; une seconde unité de calcul (62) configurée, avant d'être limitée, pour différencier la seconde valeur de commande de courant et la multiplier par la partie inductance L d'impédance Z ; et une unité d'addition (63) configurée pour additionner les sorties de la première unité de calcul (61) et de la seconde unité de calcul (62), configurée en outre pour les produire en sortie en tant que valeur estimée de l'augmentation de la tension de sortie.

**6.** Dispositif de conversion de puissance selon l'une de la revendication 2 à la revendication 5, dans lequel l'unité de limitation d'harmoniques (52) comprend :

une unité de calcul de coefficient (53) pour calculer un coefficient de correction de gain de telle sorte que la valeur estimée de l'augmentation de la tension de sortie ne dépasse pas la valeur limite ; et une unité de multiplication de coefficient (54), pour multiplier la seconde valeur de commande de courant, avant que la seconde valeur de commande de courant soit limitée, par le coefficient de correction de gain.

**7.** Dispositif de conversion de puissance selon la revendication 6, dans lequel l'unité de limitation d'harmoniques (52) a un élément de décalage (66), configuré pour ne fonctionner avec un retard que lorsque la valeur estimée diminue.

FIG.1

FIG.2

FIG.3

EP 3 316 436 B1

CONNECTION POINT (P1)

CURRENT $I_c$

$V_s$

TRANSFORMER
$Z = R + j2\pi fL$

$V_C$

INVERTER

FIG.4

Im

$V_C$

$\Delta V = V_C - V_S = I_C * (R + j2\pi fL)$

$I_c$

$V_s$

Re

0

$I_c$

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014175214 A1
- EP 0476618 A2